# EUROPÄISCHE PATENTSCHRIFT

(11) **EP 2 138 668 B1**
(45) Veröffentlichungstag und Bekanntmachung des Hinweises auf die Patenterteilung: **28.09.2011**
(21) Anmeldenummer: 09011632.8
(22) Anmeldetag: 02.06.2008
(51) Int. Cl.: E06B 5/12, E06B 9/02

(54) **Absturzsicherung**
Crash protection
Equipement de protection contre les chutes

(43) Veröffentlichungstag der Anmeldung: 30.12.2009
(62) Teilanmeldung aus: 08010049.8
(73) Patentinhaber: Feigl, Bernhard, 6911 Lochau (AT)
(72) Erfinder: Feigl, Bernhard, 6911 Lochau (AT)
(74) Vertreter: Engelhardt, Volker

(56) Entgegenhaltungen:
- DE-A1- 3 810 200

## Beschreibung

Die Erfindung bezieht sich auf eine Absturzsicherung nach dem Oberbegriff des Patentanspruches 1.

Der DE 10 2004 023 143 A1 ist eine Befestigungsvorrichtung aus Metall zu entnehmen, durch die eine Platte, insbesondere eine Glasplatte, an einem Mauerwerk abgestützt werden soll. Die Befestigungsvorrichtung besteht dabei aus zwei senkrecht zueinander und fest miteinander verbundenen Basisplatten in die jeweils eine oder mehrere Langlöcher eingearbeitet sind. Die Glasplatte weist eine oder mehrere Durchgangsbohrungen auf, die fluchtend zu den Langlöchern ausgerichtet werden, so dass die Glasplatte an einer der Basisplatten mittels Befestigungsschrauben gehalten ist. Die andere Basisplatte der Befestigungsvorrichtung wird mittels Befestigungsschrauben an dem Mauerwerk abgestützt.

Als nachteilig bei der bekannt gewordenen Befestigungsvorrichtung nach dem Stand der Technik hat sich herausgestellt, dass die Glasplatte und die Befestigungsvorrichtung starr, also unbeweglich, an dem Mauerwerk angebracht sind. Erschütterungen, insbesondere Krafteinwirkungen, die senkrecht zu dem Mauerwerk und der Platte verlaufen, werden ungedämpft von der Glasplatte an die Befestigungsvorrichtung und damit an das Mauerwerk weitergeleitet. Wenn demnach die horizontal verlaufenden Krafteinwirkungen auf die Glasplatte derart ansteigen, dass diese von der Befestigungsvorrichtung und den Befestigungsschrauben nicht mehr aufgenommen werden können, bricht die Befestigungsvorrichtung oder die Befestigungsschrauben werden aus ihren Bohrungen gerissen. Dies hat jedoch zur Folge, dass die Glasplatte nicht mehr zuverlässig an dem Mauerwerk befestigt ist und somit herunterfällt. Dabei können Personen verletzt werden.

Des Weiteren wird durch die Zerstörung der Befestigungsvorrichtung und das Herunterfallen der Glasplatte der Durchgangsbereich freigegeben, der üblicherweise von der Glasplatte verschlossen ist, um beispielsweise als Geländerbrüstung an einem Balkon oder an einer nach außen führenden Türöffnung als Absturzsicherung zu wirken. Dies führt somit zu einem weiteren Gefahrenpotenzial, denn die oftmals von Menschen aufgebrachten Kräfte, durch die die Befestigungsvorrichtung zerstört werden kann, führt beim Absturz der Glasplatte auch dazu, dass die kraftaufbringenden Personen möglicherweise zusammen mit der Glasplatte herunterfallen.

Darüber hinaus ist es auch denkbar, dass die horizontal auf die Glasplatte einwirkenden Kräfte impulsweise auftreten und folglich über eine längere Zeitdauer aufgrund von Schwingungen die Verbindung zwischen den Gewinden in dem Mauerwerk und der Befestigungsschraube bzw. zwischen den Gewinden in der Befestigungsvorrichtung und den Befestigungsschrauben ausschlagen und auch dadurch die mechanische Befestigung gelöst wird.

Aus der US 2007/0290106 A1 ist eine Absturzsicherung zu entnehmen, durch die eine Platte an einem Mauerwerk eines Gebäudes gehalten ist. Die Absturzsicherung besteht aus mindestens einem vorzugsweise in den Eckbereichen der Platte angeordneten Aufnahmekörper, der an dem Mauerwerk angebracht ist und mit mindestens zwei an der Platte arretierten Profilschienen verbunden ist, die parallel zueinander verlaufen und die über Zwischenglieder an dem jeweiligen Aufnahmekörper abgestützt sind. Dabei wird das Zwischenglied, das als U-Profil ausgebildet ist, an dem jeweiligen Aufnahmekörper das Zwischenglied, das als U-Profil ausgebildet ist, an dem jeweiligen Aufnahmekörper retativ beweglich gehalten.

Die DE 3810200 offenbart ein Bauelement für eine Fassaden verkleidung, und insbesondere eine Absturzsicherung nach dem Oberbegriff des Anspruchs 1.

Als nachteilig bei dieser Ausgestaltung der Absturzsicherung nach dem Stand der Technik hat sich herausgestellt, dass eine auf die Bauteile der Absturzsicherung einwirkende Kraft nicht abgedämpft werden kann. Vielmehr wird die Kraft unmittelbar an die U-Profilschienen von der Glasplatte auf die Aufnahmekörper übertragen, so dass insbesondere bei impulsweisen Krafteinwirkungen Beschädigungen an den jeweiligen Bauteilen der Absturzsicherung auftreten können.

Es ist daher Aufgabe der Erfindung, eine Absturzsicherung der eingangs genannten Gattung zur Verfügung zu stellen, die zum Einen zuverlässig an einem Mauerwerk eines Gebäudes angebracht werden kann und durch die zum Anderen die auf diese einwirkenden Energien in Form von Kräften und Drehmomenten derart aufgenommen werden, dass diese gedämpft und somit reduziert an das Mauerwerk weitergeleitet sind. Durch die erfindungsgemäße Absturzsicherung soll demnach ein Energieabbau der auf die Glasplatte einwirkenden Kräfte oder Drehmomente gewährleistet sein.

Diese Aufgabe wird erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass zwischen der die Platte abstützenden U-Profilschienen und den vier Aufnahmekörpern, die an dem Mauerwerk über Befestigungsschrauben gehalten sind, ein Dämpfungselement angeordnet ist, das als Silikonmatte ausgebildet ist, können die auf die Platte einwirkenden Kräfte und Drehmomente gedämpft werden.

In der Zeichnung ist ein erfindungsgemäßes Ausführungsbeispiel dargestellt, das nachfolgend näher erläutert wird. Im Einzelnen zeigt:
- Figur 1: eine Absturzsicherung zur Halterung einer Platte, mit vier fest an einem Mauerwerk angebrachten Aufnahmekörpern, die in ihrem Querschnitt als U-Profil ausgestaltet sind, wobei ein erster Schenkel des U-Profils fest mit dem Mauerwerk verbunden ist und zwischen dem ersten und dem zweiten Schenkel des U-Profils eine an der Platte befestigte U-Profilschiene mit einem an diese angeformte L-förmig ausgestalteter Stützkörper eingesetzt ist, im Schnitt und im unbelasteten Zustand,
- Figur 2: die Absturzsicherung gemäß Figur 1 im belasteten Zustand.

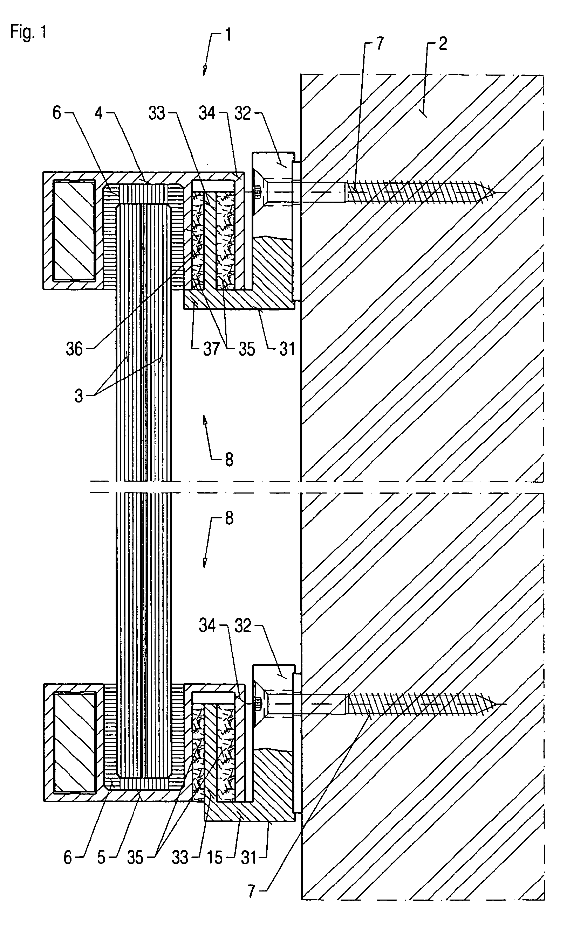

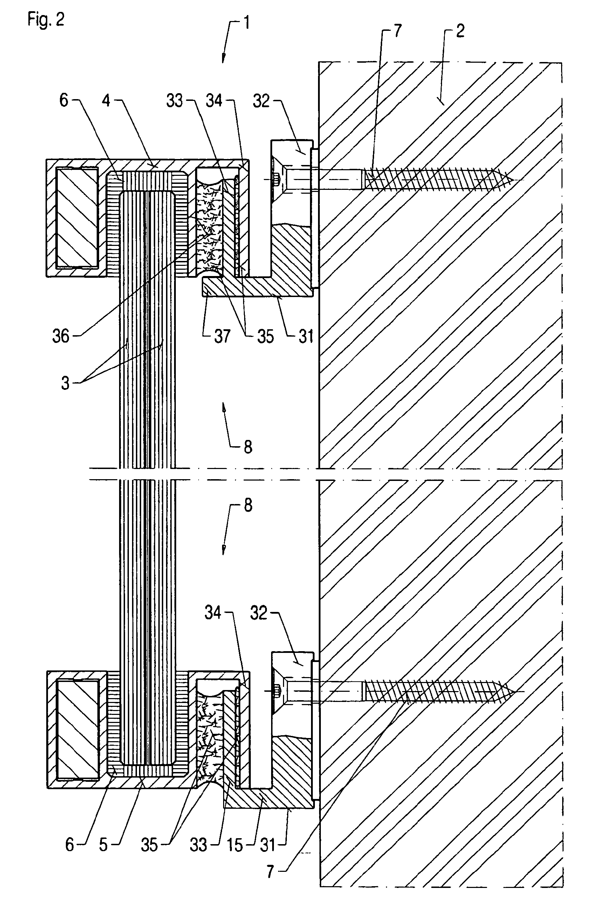

Den Figuren 1 und 2 kann eine Absturzsicherung 1 entnommen werden, durch die eine in einem Mauerwerk 2 vorhandene Türöffnung 9 ganz oder zumindest teilweise abgedeckt ist, um zu verhindern, dass Personen, Tiere, Gegenstände oder dgl. aus der Türöffnung 9 herausfallen können. Um ein ästhetisch ansprechendes Erscheinungsbild für die Absturzsicherung 1 zu erreichen, besteht diese aus zwei miteinander verbundenen Glasplatten 3, die als Sicherheitsglas ausgebildet sind. Gegebenenfalls können die Glasplatten 3 ganz oder teilweise emailliert sein, um eine Sichtschutzwand zu erzeugen.

Die beiden Glasplatten 3 sind in zwei zueinander parallel verlaufenden U-Profilschienen 4 und 5 mittels einer Klebeschicht 6 arretiert. An dem Mauerwerk 2 sind, wie dies nachfolgend noch näher erläutert wird, vier Aufnahmekörper 8 mittels Befestigungsschrauben 7 angebracht. Die Aufnahmekörper 8 können vorzugsweise mit der U-Profilschiene 4 ausschließlich verbunden sein und die Profilschiene 5 wird starr an dem Mauerwerk 2 oder einem Fensterstockrahmen befestigt. Die beiden U-Profilschienen 4 und 5 stehen mit den jeweiligen Aufnahmekörpern 8 in kraftschlüssiger Wirkverbindung. Diese Wirkverbindung ist derart konstruktiv ausgestaltet, dass bei einer horizontal belasteten Glasplatte 3 eine Dämpfung der auf die Glasplatte 3 einwirkenden Kräfte erfolgt.

Die Platte 3 weist eine rechteckförmige Kontur auf; die Aufnahmekörper 8 sind dabei den vier Eckbereichen der Platte 3 zugeordnet.

Der Aufnahmekörper 8 ist als U-Profil 31 ausgestaltet, wobei der erste Schenkel 32 des U-Profils 31 dem Mauerwerk zugewandt und an diesem mittels den Befestigungsschrauben 7 gehalten ist. Folglich ist das U-Profil 31 parallel zu dem Mauerwerk 2 und der Glasplatte 3 ausgerichtet und daher nach oben offen. An den Profilschienen 4 und 5 ist ein L-förmiger Stützkörper 34 angeformt, der zusammen mit einem der Schenkel der jeweiligen U-Profilschiene 4 und 5 ein U-Profil bildet. Dieses U-Profil ist nunmehr umgekehrt zu dem an dem Mauerwerk 2 angebrachten U-Profil 31 ausgerichtet und kann folglich in dieses von oben eingesetzt werden. Das freie Ende des L-förmigen Stützkörpers 34 liegt zudem an dem horizontal verlaufenden Bereich des U-Profils 31 auf und wird durch diesen abgestützt.

Um nunmehr bei vertikal auftretenden Kräften eine Dämpfung zu erreichen, ist zwischen der Außenwand 36 der U-Profilschienen 4 und 5 und dem zweiten Schenkel 33 des U-Profils 31 sowie zwischen diesem und dem vertikal verlaufenden Schenkel des Stützkörpers 34 eine Silikonmatte 35 eingesetzt. Insbesondere aus der Figur 2 wird ersichtlich, dass sich die Dicken der beiden Silikonmatten 35 bei vertikal auftretenden Kräften verändern. Die dem Mauerwerk 2 benachbarte Silikonmatte 35 wird dabei zusammengedrückt und die zwischen der Glasplatte 3 und dem zweiten Schenkel 33 des U-Profils 31 angebrachte Silikonmatte 35 wird aufgeweitet. Die vertikal einwirkenden Kräfte werden somit gedämpft.

Um die Abstützung der U-Profilschiene 4 und 5 zu verbessern, ist seitlich neben dem zweiten Schenkel 33 des U-Profils 31 ein horizontal verlaufendes Ansatzstück 37 angeformt, auf dessen Oberfläche das eine freie Ende der U-Profilschiene 4 oder 5 im Ruhezustand aufliegt und somit durch dieses zusätzlich abgestützt wird.

## Patentansprüche

1. Absturzsicherung (1), durch die eine Platte (3), insbesondere eine Glasplatte, an einem Mauerwerk (2) oder an einem Fensterstockrahmen eines Gebäudes gehalten ist, mit mindestens einem vorzugsweise den Eckbereichen der Platte (3) zugeordneten Aufnahmekörper (8), der bzw. die an dem Mauerwerk (2) angebracht ist bzw. sind, und mit mindestens zwei an der Platte (3) arretierten U-Profilschienen (4, 5), die parallel zueinander verlaufen und die über ein U-Profil (31) an dem jeweiligen Aufnahmekörper (8) abgestützt sind,
**dadurch gekennzeichnet,**
**dass** ein erster Schenkel (32) des U-Profils (31) an dem Mauerwerk (2) angebracht ist, dass zwischen dem ersten und dem zweiten Schenkel (32, 33) des U- Profils (31) ein an der U-Profilschiene (4, 5) angeformter L-förmiger Stützkörper (34) eingesetzt ist, durch den die U-Profilschiene (4, 5) in vertikaler Richtung an dem U-Profil (31) gehalten ist, dass zwischen der Außenwand (36) der U-Profilschiene (4, 5) und der Außenseite des zweiten Schenkels (33) des U-Profils (31) und zwischen der Innenseite des zweiten Schenkels (33) und dem an der U-Profilschiene (4, 5) angeformten Stützkörper (34) eine Dämpfungsschicht in Form einer Silikonmatte (35) oder dgl. angebracht ist, dass sich bei horizontal auftretenden Kräften die Dicken der beiden Silikonmatten (35) derart verändern, dass die dem Mauerwerk (2) benachbarte Silikonmatte (35) zusammengedrückt und die zwischen der Glasplatte (3) und dem zweiten Schenkel (33) des U-Profils (31) angebrachte Silikonmatte (35) aufgeweitet ist.

2. Absturzsicherung nach Anspruch 1,
**dadurch gekennzeichnet,**
**dass** die senkrecht zu dem Mauerwerk (2) verlaufenden Bereiche des Schenkels (33) des U-Profils (31) als Stützfläche dienen, auf denen das freie Ende des Stützkörpers (34) der Profilschiene (4, 5) aufliegt.

3. Absturzsicherung nach Anspruch 2,
**dadurch gekennzeichnet,**
**dass** seitlich neben dem vertikal verlaufenden Bereich des zweiten Schenkels (33) ein horizontal ausgerichtetes Ansatzstück (37) angebracht ist, auf dem die freie Stirnseite der U-Profilschiene (4, 5) im montierten Zustand aufliegt.

## Claims

1. A crash protection (1) by means of which a panel (3), in particular a pane of glass, is held against a masonry wall (2) or a window frame of a building, with at least one holding body (8) preferably allocated to the corner areas of the panel (3), which is or are attached to the masonry wall (2), and with at least two U-section rails (4, 5) locked onto the panel (3) running in parallel with one another and supported on the corresponding holding body (8) by means of a U-section (31),
**characterised in that**,
a first leg (32) of the U-section (31) is attached to the masonry wall (2), that between the first and the second leg (32, 33) of the U-section (31) there is inserted an L-shaped support body (34) formed on the U-section rail (4, 5), by means of which the U-section rail (4, 5) is held in the vertical direction on the U-section (31), that a damping layer in the form of a silicone mat (35) or the like is attached between the outer wall (36) of the U-section rail (4, 5) and the outside of the second leg (33) of the U-section (31) and between the inside of the second leg (33) and the support body (34) formed onto the U-section rail (4, 5), that the thicknesses of the two silicone mats (35) change when horizontal forces arise in such a way that the silicone mat (35) located adjacent to the masonry wall (2) is compressed and the silicone mat (35) attached between the pane of glass (3) and the second leg (33) of the U-section (33) is stretched.

2. The crash protection in accordance with Claim 1,
**characterised in that**,
the areas of the leg (33) of the U-section (31) running at right angles to the masonry wall (2) serve as a support surface against which the free end of the support body (34) of the section rail (4, 5) makes contact.

3. The crash protection in accordance with Claim 2,
**characterised in that**,
a horizontally aligned attachment piece (37) is fitted on the side adjacent to the vertically running area of the second leg (33), against which the free end of the U-section rail (4, 5) makes contact when installed.

## Revendications

1. Protection de chute (1), permettant de retenir une plaque (3), en particulier une plaque de verre, sur un murage (2) ou sur un cadre de dormant d'un bâtiment, avec au moins un corps de logement (8) assigné de préférence aux coins de la plaque (3), qui est fixé (qui sont fixés) sur le murage (2), et avec au moins deux glissières parallèles de profil en U (4, 5) retenues sur la plaque (3) et qui, à l'aide d'un profil en U (31), s'appuient sur le corps de logement (8) respectif,
**caractérisée en ce que**
un premier bras (32) du profil en U (31) est prévu sur le murage (2), qu'entre le premier et le deuxième bras (32, 33) du profil en U (31), il est monté un corps d'appui (34) en L, formé sur la glissière de profil en U (4, 5), par lequel la glissière de profil en U (4, 5) est retenue en direction verticale sur le profil en U (31), qu'entre la paroi extérieure (36) de la glissière de profil en U (4, 5) et la face extérieure du deuxième bras (33) du profil en U (31) et entre la face intérieure du deuxième bras (33) et le corps d'appui (34) formé sur la glissière de profil en U (4, 5), il est prévu une couche d'amortissement sous la forme d'une natte en silicone (35) ou un élément similaire, qu'en cas de forces horizontales les épaisseurs des deux nattes en silicone (35) se transforment de sorte que la natte en silicone (35) voisine du murage (2) est comprimée et que la natte en silicone (35) prévue entre la plaque de verre (3) et le deuxième bras (33) du profil en U (31) connaisse une extension.

2. Protection de chute d'après la revendication 1,
**caractérisée en ce que**
les endroits du bras (33) du profil en U (31) perpendiculaires au murage (2) servent de surface d'appui sur laquelle porte l'extrémité libre du corps d'appui (34) de la glissière de profil en U (4, 5).

3. Protection de chute d'après la revendication 2,
**caractérisée en ce que**
sur le côté de l'endroit vertical du deuxième bras (33), il est monté un embout horizontal (37) sur lequel porte la face frontale libre de la glissière de profil en U (4, 5) quand en état monté.
